Europäisches Patentamt

**European Patent Office**

Office européen des brevets

(11) Veröffentlichungsnummer: **0 253 068**
**B1**

(12) **EUROPÄISCHE PATENTSCHRIFT**

(45) Veröffentlichungstag der Patentschrift:
07.03.90

(21) Anmeldenummer: 87105264.3

(22) Anmeldetag: 09.04.87

(51) Int. Cl.⁴: **B29C 43/22**
**// B29L7:00**

(54) **Verfahren und Vorrichtung zum Herstellen von Bahnen.**

(30) Priorität: 16.07.86 DE 3624004

(43) Veröffentlichungstag der Anmeldung:
20.01.88 Patentblatt 88/3

(45) Bekanntmachung des Hinweises auf die Patenterteilung:
07.03.90 Patentblatt 90/10

(84) Benannte Vertragsstaaten:
BE DE FR GB NL

(56) Entgegenhaltungen:
GB-A- 1 036 783
US-A- 2 532 280

(73) Patentinhaber: RÜTGERSWERKE
AKTIENGESELLSCHAFT, Mainzer Landstrasse 217,
D-6000 Frankfurt am Main 1(DE)

(72) Erfinder: Rühl, Karl, Dr., Hochwaldstrasse 13,
D-6350 Bad Nauheim(DE)
Erfinder: Carl, Hans-Egon, Dipl.-Ing., Sigehardstrasse 8,
D-6143 Lorsch(DE)
Erfinder: Sassner, Manfred, Querstrasse 6,
D-6369 Nidderau 5(DE)
Erfinder: Korte, Leo, Am Wolfsgraben 6,
D-6233 Kelkheim(DE)

ACTORUM AG

## Beschreibung

Die Erfindung betrifft ein Verfahren zur Herstellung von Bahnen aus nicht rakelfähigen Massen aus Bitumen, kautschukmodifiziertem Bitumen und hochgefülltem Bitumen durch Aufwalzen der Massen auf ein gekühltes Band, und die dazu notwendige Vorrichtung. Derartige Bahnen finden vielfach Verwendung, z. B. als Dach- oder Dichtungsbahnen sowie als Klebe- oder Korrosionsschutzfolien.

Das einfachste Verfahren zur Herstellung von Bahnen aus thermoplastischen Massen ist es, die entsprechenden Massen in fließfähigem Zustand auf ein laufendes Kühlband aufzubringen und mittels einer feststehenden Rakel zu einer gleichmäßig dicken Bahn zu formen, die am anderen Ende des Kühlbandes abgenommen wird.

Dieses Verfahren läßt sich nicht bei allen thermoplastischen Massen anwenden.

Es gibt thermoplastische Massen, die sich mittels Rakeln nicht gleichmäßig verteilen lassen, so daß entsprechend gefertigte Bahnen keine plane Oberfläche haben oder sogar in ihrer Dicke schwanken. Derartige Massen sind nicht rakelfähig.

Um aus diesen Massen Bahnen zu formen gibt es folgende Möglichkeiten: Die Massen werden in plastischem Zustand durch Durchlaufen zweier Walzen im Wasserbad vorkalibriert und auf ein im Wasserbad liegendes Band aufgegeben. Nach dem Abkühlen erfolgt die Endkalibrierung.

Nach einem anderen Verfahren werden die Massen in einer gekühlten Doppelbandanlage oder zwischen einem Kühlband und einer Glätt- und Trennfolie zu Bahnen geformt und abgekühlt.

Diese Verfahren sind apparativ sehr aufwendig.

Es ist daher Aufgabe der Erfindung, ein Verfahren zur Herstellung von Bahnen aus nicht rakelfähigen thermoplastischen Massen bereitzustellen, das mit geringem apparativem Aufwand Bahnen liefert, die ohne weitere Nachbearbeitung mit einwandfreier Oberfläche und mit gleichbleibender Dicke erhalten werden.

Die Lösung der Aufgabe erfolgt durch ein Verfahren gemäß der Ansprüche 1 bis 6 und durch eine Vorrichtung gemäß Ansprüche 7 bis 9.

Es wurde überraschenderweise gefunden, daß sich aus nicht rakelfähigen thermoplastischen Massen durch einfaches Aufwalzen auf ein Band Bahnen mit gleichmäßiger Dicke und einwandfreier Oberfläche herstellen lassen, wenn die Massen nicht in einer sondern in zwei Teilmengen aufgegeben werden, die im Kalibrierspalt zwischen Walze und Kühlband zu einer Bahn vereinigt werden.

Der erste Teil der zu verarbeitenden thermoplastischen Masse wird in fließfähigem Zustand als dünne Schicht auf eine Kühlwalze gebracht, die in einem definierten Abstand über einem in gleicher Richtung und Geschwindigkeit laufenden Kühlband rotiert. Der definierte Abstand zwischen Kühlband und Walze ist der Kalibrierspalt und bestimmt die Dicke der zu fertigenden Bahn. Die dünne Schicht kühlt während des Teilumlaufs auf der Walze so ab, daß sich die Masse nach Passieren des Kalibrierspaltes leicht von der Walze löst. Kurz vor dem Kalibrierspalt wird die zur erforderlichen Dicke der Bahn notwendige Restmasse in plastischem Zustand zugeführt. Beim Passieren des Kalibrierspaltes wird diese Restmasse mit der vorgekühlten dünnen Schicht vereinigt. So wird beim Durchlaufen des Kalibrierspaltes eine gleichmäßig dicke Bahn geformt, die sich sofort hinter dem Kalibrierspalt von der Walze löst. D. h. das Kühlband transportiert jetzt eine erkaltende Bahn, deren Oberfläche frei ist. Dies bedingt zwei weitere Vorteile gegenüber der Fertigung gemäß dem Stand der Technik.

Die freiliegende Oberfläche kann Wärme abstrahlen. Die durch die Vorrichtung zu erfolgende Energieabführung ist demnach geringer. Das Kühlband benötigt eine weniger intensive Kühlung oder kann kürzer ausgelegt werden.

Die freie Oberfläche ist noch nicht ganz abgekühlt. Sie ist demnach noch in einem halbplastischen Zustand. Wird die freie Oberfläche in diesem Zustand mit einem körnigen Material abgestreut, so wird dabei eine besonders intensive Verankerung des körnigen Materials auf der Bahn erreicht.

Nach dem erfindungsgemäßen Verfahren können Bahnen aus nich rakelfähigen thermoplastischen Massen, Bitumen, kautschukmodifiziertem Bitumen und insbesondere hochgefüllte Bitumenmassen hergestellt werden.

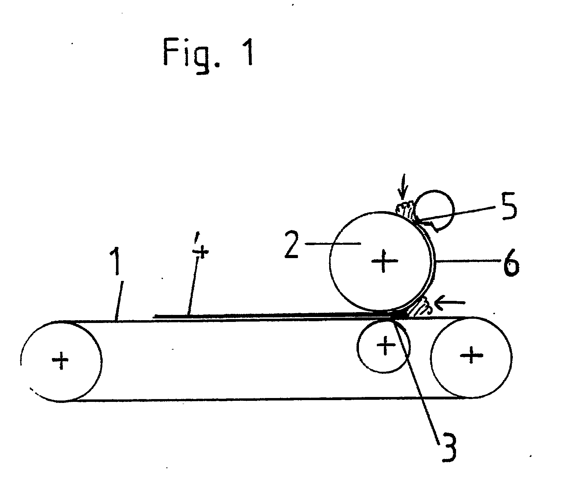

Die Vorrichtung zum erfindungsgemäßen Verarbeiten der thermoplastischen Massen ist schematisch im Querschnitt in Figur 1 dargestellt. Sie besteht aus einem Kühlband (1) und einer über dem Kühlband angeordneten Kühlwalze (2), wobei der Mindestabstand der Walze vom Band den Kalibrierspalt (3) für die zu erstellende Bahn (4) darstellt. An der Kühlwalze befindet sich eine Aufbringvorrichtung (5) für eine dünne Schicht einer thermoplastischen Masse (6). Diese Aufbringvorrichtung kann eine Rakel oder Rakelwalze sein.

Es erscheint auf den ersten Blick widersinnig, daß die dünne Schicht einer nicht rakelfähigen Masse mittels einer Rakel oder Rakelwalze erzeugt werden kann. Dies ist jedoch insofern möglich, als an die durch Rakeln hergestellte Oberfläche der dünnen Schicht keine besonderen Anforderungen gestellt werden. Diese Oberfläche wird am Kalibrierspalt mit der restlichen Masse vereinigt und dadurch wird erst die endgültige Oberfläche der walzenabgewandten Seite der Bahn erzeugt.

Das Kühlband hat im allgemeinen eine Temperatur, die im Bereich von 0 bis 20°C, bevorzugt im Bereich von 8 bis 12°C, liegt.

Die Kühlwalze hat im allgemeinen einen Durchmesser zwischen 60 und 100 cm und rotiert im allgemeinen mit einer Geschwindigkeit von 20 bis 120 Upm. Sie wird entweder mittels Wasser oder durch ein spezielles Kühlmedium auf eine Temperatur im Bereich von -20 bis +20 °C gekühlt.

Ein Teil der thermoplastischen Masse wird in fließfähigem Zustand an der Aufbringvorrichtung (5) in der gewünschten Bahnbreite in dünner Schicht auf die Walze aufgebracht. Die Dicke dieser Schicht liegt im Bereich von 0,2 mm (für dünne Bahnen) bis 3 mm (für dicke Bahnen). Die Temperatur der Masse muß unter dem Zersetzungspunkt der jeweils temperaturempfindlichsten Komponente der Masse liegen. Andererseits muß die Viskosität der Masse so niedrig sein, daß eine gute Verteilung der Masse auf der gewünschten Breite der Walze gewährleistet ist. Im allgemeinen liegen diese Temperaturen im Bereich von 150 bis 200 °C.

Durch die Rotation der Kühlwalze wird die dünne Schicht zum Kalibrierspalt transportiert und dabei gleichzeitig abgekühlt. Diese Abkühlung muß durch Optimierung der variablen Kühltemperatur und Verweilzeit der Schicht auf der Walze, d. h. Abstand der Aufbringanordnung vom Kalibrierspalt und Umdrehungsgeschwindigkeit so eingestellt werden, daß sich die dünne Schicht nach Passieren des Kalibrierspaltes leicht von der Walze löst, daß sich ihre der Walze abgewandte Oberfläche aber noch einwandfrei mit der vor dem Kalibrierspalt zugeführten Restmasse verschmelzen läßt. Diese Restmasse wird vor dem Kalibrierspalt in fließfähigem Zustand auf das laufende Kühlband in der der dünnen Schicht entsprechenden Breite aufgebracht. Sie wird vom Kühlband in den Kalibrierspalt transportiert und dort mit der auf der Walze gefertigten dünnen Schicht verschmolzen, so daß eine Bahn mit gleichmäßiger Schichtdicke von 2 bis 8 mm erzeugt wird.

Nach Passieren des Kalibrierspaltes löst sich die gesamte Bahn von der Walze und wird auf dem Kühlband zur Abnahmestelle transportiert. In diesem einfachen Herstellungsverfahren erfüllt die Kühlwalze somit gleichzeitig auch die Funktionen einer Kalibrier- und einer Glättwalze.

Bei der Herstellung einer homogenen Bahn ist die Masse für die dünne Schicht identisch mit der Restmasse. Es ist ein weiterer Vorteil des erfindungsgemäßen Verfahrens, daß sich in einfachster Weise auch Bahnen mit unterschiedlicher Ober- und Unterschicht herstellen lassen, wenn die Masse für die dünne Schicht und die Restmasse verschieden sind.

Desweiteren lassen sich in einfachster Weise Bahnen mit Einlagen herstellen, wenn beim Aufbringen der dünnen Schicht auf der der Walze abgewandten Seite dieser Schicht ein band- oder streifenförmiges Material, wie etwa Vlies, Gewebebahn, Gewebestreifen oder Metallfolie, aufgegeben wird.

## Patentansprüche

1. Verfahren zur Herstellung von Bahnen aus nicht rakelfähigen Massen aus Bitumen, kautschukmodifiziertem Bitumen und hochgefülltem Bitumen durch Aufwalzen der Massen auf ein gekühltes Band, dadurch gekennzeichnet, daß zunächst ein Teil der Masse in fließfähigem Zustand als dünne Schicht auf eine in definiertem Abstand (Kalibrierspalt) über dem Kühlband angebrachte, rotierende Kühlwalze aufgebracht wird und kurz vor dem Kalibrierspalt die zur erforderlichen Dicke der Bahn notwendige Restmasse in fließfähigem Zustand zugeführt und im Kalibrierspalt mit der dünnen Schicht zur Endfolie vereinigt und geformt wird, wobei die Verweilzeit der dünnen Schicht auf der Kühlwalze so groß sein muß, daß nach Passieren des Kalibrierspaltes ein Ablösen gewährleistet ist.

2. Verfahren nach Anspruch 1, dadurch gekennzeichnet, daß die dünne Schicht 0,2 bis 3 mm dick ist.

3. Verfahren nach den Ansprüchen 1 und 2, dadurch gekennzeichnet, daß die Masse für die dünne Schicht und die Restmasse verschieden sind.

4. Verfahren nach einem der Ansprüche 1 bis 3, dadurch gekennzeichnet, daß beim Aufbringen der dünnen Schicht auf der der Walze abgewandten Seite dieser Schicht ein band- oder streifenförmiges Material aufgegeben wird.

5. Verfahren nach einem der Ansprüche 1 bis 4, dadurch gekennzeichnet, daß die Bahn nach Passieren des Kalibrierspaltes auf der freien Oberfläche mit einem körnigen Material abgestreut wird.

6. Verfahren nach einem der Ansprüche 1 bis 5, dadurch gekennzeichnet, daß die Temperatur der Kühlwalze im Bereich von −20 bis +20°C liegt.

7. Vorrichtung zur Herstellung einer Bahn aus nicht rakelfähigen Massen aus Bitumen, kautschukmodifiziertem Bitumen und hochgefülltem Bitumen, bestehend aus einer Kühlwalze, die im Abstand der gewünschten Dicke der Bahn über einem Kühlband angeordnet ist und an der sich eine Aufbringvorrichtung für eine dünne Schicht einer thermoplastischen Masse befindet.

8. Vorrichtung nach Anspruch 7, dadurch gekennzeichnet, daß die Kühlwalze einen Durchmesser von 60 bis 100 cm hat.

9. Vorrichtung nach Anspruch 7 oder 8, dadurch gekennzeichnet, daß die Aufbringvorrichtung für die dünne Schicht eine Rakel oder Rakelwalze ist.

## Claims

1. A method for producing continuous sheets from non-spreadable quantities of bitumen, rubber-modified bitumen and highly-filled bitumen, by rolling the quantities of material on to a cooled belt, characterised in that first a part of the material is applied, in a flowable state, as a thin layer, to a rotating cooling roller arranged at a defined distance (calibrating gap) above the cooling belt, and shortly before the calibrating gap the remaining material necessary for the required thickness of the sheet is fed in a flowable state and combined and shaped in the calibrating gap with the thin layer to form the final film, the thin layer having to remain on the cooling roller for as long as is necessary to ensure detachment after the calibrating gap has been passed.

2. A method according to Claim 1, characterised in that the thin layer is 0.2 to 3 mm thick.

3. A method according to Claims 1 and 2, characterised in that the material for the thin layer and the remaining material are different.

4. A method according to any one of Claims 1 to 3, characterised in that, when the thin layer is being applied, a tape-shaped or strip-shaped material is charged on the side of this layer facing away from the roller.

5. A method according to any one of Claims 1 to 4, characterised in that the sheet, after the calibrating gap has been passed, is strewn with a granular substance on the free surface.

6. A method according to any one of Claims 1 to 5, characterised in that the temperature of the cooling roller is in the range of –20 to +20°C.

7. A device for producing a continuous sheet from non-spreadable quantities of bitumen, rubber-modified bitumen and highly-filled bitumen, comprising a cooling roller which is arranged above a cooling belt at a distance of the desired thickness of the sheet and against which there is a device for applying a thin layer of a thermoplastic material.

8. A device according to Claim 7, characterised in that the cooling roller has a diameter of 60 to 100 cm.

9. A device according to Claim 7 or 8, characterised in that the device for applying the thin layer is a doctor blade or doctor blade roller.

**Revendications**

1. Procédé pour la fabrication de feuilles continues à partir de masses non raclables à base de bitume, de bitume modifié par du caoutchouc et de bitume fortement chargé par laminage des masses sur une bande refroidie, caractérisé en ce que, dans un premier temps, une partie de la masse à l'état coulant est appliquée sous forme d'une couche mince sur un cylindre de refroidissement en rotation implanté selon un espacement défini (entrefer de calibrage) au-dessus de la bande de refroidissement et que, peu avant l'entrefer de calibrage, on amène, à l'état coulant, la masse restante nécessaire pour l'épaisseur requise de la feuille continue et qu'on la réunit dans l'entrefer de calibrage à la couche mince pour former une feuille définitive, le temps de séjour de la couche mince sur le cylindre refroidisseur devant être suffisamment important pour qu'un décollement soit assuré après le passage dans l'entrefer de calibrage.

2. Procédé selon la revendication 1, caractérisé en ce que la couche mince est d'une épaisseur de 0,2 à 3 mm.

3. Procédé selon les revendications 1 et 2, caractérisé en ce que la masse pour la couche mince et la masse restante sont différentes.

4. Procédé selon les revendications 1 à 3, caractérisé en ce que, lors de l'application de la couche mince, on dépose une matière en forme de bande ou de ruban sur le côté de cette couche opposée au cylindre.

5. Procédé selon les revendications 1 à 4, caractérisé en ce qu'après que la feuille continue a traversé l'entrefer de calibrage, on saupoudre la surface libre d'une matière granulaire.

6. Procédé selon les revendications 1 à 5, caractérisé en ce que la température du cylindre refroidisseur se situe dans le domaine de –20 à +20°C.

7. Dispositif pour la fabrication d'une feuille continue à partir de masses non raclables à base de bitume, de bitume modifié par du caoutchouc et de bitume fortement chargé, constitué par un cylindre refroidisseur, lequel est disposé selon un espacement correspondant à l'épaisseur souhaitée de la feuille continue au-dessus d'une bande de refroidissement et au niveau duquel se trouve un dispositif pour l'application d'une couche mince d'une masse thermoplastique.

8. Dispositif selon la revendication 7, caractérisé en ce que le cylindre de refroidissement présente un diamètre de 60 à 100 cm.

9. Dispositif selon la revendication 7 ou 8, caractérisé en ce que le dispositif pour l'application d'une couche mince est un racloir ou un cylindre racleur.

EP 0 253 068 B1

# Fig. 1